# EUROPEAN PATENT SPECIFICATION

(11) **EP 1 081 720 B1**
(45) Date of publication and mention of the grant of the patent: **24.01.2007**
(21) Application number: 00115711.4
(22) Date of filing: 21.07.2000
(51) Int. Cl.: H01B 7/18

(54) **Electrical cable with self-repairing proctection and apparatus for manufacturing the same**
Elektrisches Kabel mit selbstheilendem Kabelschutz und sein Herstellungsapparat
Câble électrique avec protection autocicatrisante et son appareil de fabrication

(30) Priority: 30.08.1999 EP 99117013
(43) Date of publication of application: 07.03.2001
(73) Proprietor: Pirelli & C. S.p.A., 20123 Milano (IT)
(72) Inventor: Maunder, Andrew L., Greenwood, South California 29649 (US); Bareggi, Alberto, 20133 Milano (IT); Balconi, Luca, 20091 Bresso (Milano) (IT); Dell'Anna, Gaia, 20145 Milano (IT); Pozzati, Giovanni, 89100 Sens (FR); Belli, Sergio, 57126 Livorno (IT)
(74) Representative: Tansini, Elio Fabrizio

(56) References cited:
- DE-A- 1 415 474
- FR-A- 2 085 225
- GB-A- 2 032 678

## Description

The present invention relates to a cable, in particular a cable for electric power transmission or distribution or for telecommunications. In more detail, the present invention relates to a cable as above defined comprising at least one outer coating sheath and provided with self-repairing protection which is capable of restoring the continuity of the coating sheath after it has been broken.

Electrical cables, in particular low- or medium-voltage cables for the distribution of electric energy for domestic or industrial use, generally consist of one or more conductors individually insulated by a polymeric material and coated with a protective sheath, which is also made of a polymeric material. These cables, in particular when installed underground, either directly or inserted in tunnels or inside buried pipes, are subjected to damages on these layers caused by various types of mechanical abuses, for example accidental impact with sharp tools such as shovels or picks, which exert both cutting and compression actions on the cable, This can lead to partial or complete rupture of the outer sheath and possibly also of the inner insulating layer, which will bring about infiltration of moisture and generation of leakage currents. If rupture of the coating layers reaches the conductor, the combined effect of leakage currents and moisture leads to a gradual corrosion of the conductor until, at the most, a complete breakage of the conductor itself.

To obtain effective protection against such mechanical abuses, the cable can be provided with an outer structure capable of withstanding both cutting and compression, this outer structure consisting of a sheath made of a metal or a plastic material combined with a metal armouring, for example. In addition to being expensive, this solution leads to an important increase in the overall dimensions and rigidity of the cable, thus making this solution unsuitable for cables requiring easy installation and low costs, such as, in particular, in the case of low-voltage cables.

FR 2 085 225 discloses a cable with a binding agent (pitch) between the sheath and the cable core. This binding agent acts as a corrosion inhibitor. As a pitch for protecting the cable against corrosion, the noncorrosive binding agent disclosed in FR 2 085 225 is not a self-repairing material. In particular, the pitch used by FR 2 085 225 is not dielectric, as it is well known that pitch is electrically conductive due to the presence of a certain amount of carbon particles.

GB 2,032,678 discloses an electrical power cable including at least one conductor, an insulating layer, an optional inner semi-conductive layer disposed between the conductor and the insulating layer, a metal screen, an optional outer semi-conductive layer disposed between the insulating layer and the metal screen, at least one separating layer, at least one outer humidity reducing layer of a paste material, and an outer jacket.

Paste layer is disposed between the insulating layer and the outer jacket to reduce humidity within the cable and prevent "water trees" that can damage the cable insulation. To achieve humidity reduction, the paste layer includes a water soluble salt or a salt forming a stable hydrate, such as CaCl MgCl or LiCl. Water soluble salts or salts forming stable hydrates, however, inevitably make paste layer electrically conductive. Even in alternative embodiments where a sub-layer of paste does not include humidity-reducing materials, GB 2,032,678 describes the paste material as being "semi-conductive."

In Patent Application DE-1,590,958 a telecommunications or high-current cable is described which is protected from mechanical damages by means of an outer sheath provided, on its inside, with microcapsules containing a liquid that is capable of rapidly solidifying, once the microcapsule has been broken. To this purpose, use of the two components commonly employed for manufacturing expanded polyurethane is mentioned as the preferred one, these components being microencapsulated separately so that they react together on breaking of the microcapsules, forming an expanded material which closes the accidental cut. Alternatively, liquids solidifying when brought into contact with external agents, moisture for example, may be used.

According to the Applicant, the solution envisaged in the above-mentioned patent application is of difficult practical implementation and has many drawbacks. Firstly it is to note that the possibility of self-repairing is limited to the outer sheath, and no indications regarding the possibility of restoring integrity of the inner insulating layer are provided. In addition, to obtain an effective self-repairing effect, it is necessary to introduce a large amount of microencapsulated material during sheath extrusion, which operation can be rather difficult and also expensive. It is finally to be pointed out that the mechanism of action of the microcapsules is irreversible, so that the self-repairing effect can be carried out only once, i.e. at the moment the microcapsules are broken. Actually, during the various stages of the cable life (manufacturing, storage, installation, use), the coating layers are inevitably subjected to external mechanical actions of compression and bending and to thermal cycles of expansion and compression, which can lead to rupture of the microcapsules with consequent expansion and/or solidification of the material contained therein. This material therefore, will be no longer able to effect the desired self-repairing action when the sheath is actually damaged. It is also to be noted that, even when microcapsules are used which contain a liquid material solidifying on contact with moisture, accidental rupture of the microcapsules without any actual damage to the outer sheath leads in any event to solidification of the material because inside the cable there is always some residual moisture.

The Applicant has now found that, in consequence of a mechanical damage creating a discontinuity in at least one of the cable coating layers, it is possible to obtain effective self-repairing of the coating by virtue of the presence of an inner layer, placed, for example, between the insulating layer and the outer sheath, and comprising a material having a predetermined cohesiveness and at the same time a controlled flowability, which is capable of repairing the damage by restoring the continuity of the coating layer. After a discontinuity in the coating has been created, the material "moves" towards the damaged point and fills up the discontinuity at least partly by forming a substantially continuous layer which is capable of maintaining the cable functionality under the expected working conditions.

The action of the self-repairing material taking place with a reversible mechanism, among other things, prevents moisture infiltration and establishment of leakage currents, and consequently quick corrosion of the conductor.

Based on this starting perception, the Applicant has developed and set up a self-repairing cable and related manufacturing process, being the object of the Patent Application EP 0 940 819 A, falling under Art-54(3) EPC, contents of which is considered as herein reported for supplement and completion of the detailed description of the present invention as hereinafter set forth. In accordance with the present invention, the Applicant has now found that by arranging one or more anchoring portions between the outer sheath and the core of the cable, each housed in an interruption region of the self-repairing material extension, further improvements can be advantageously achieved in terms of cable reliability. In particular, any possibility of relative sliding between the outer sheath and inner core of the cable is advantageously eliminated, independently of whether said core is made up of one or more bare conductors or of conductors provided with one or more coating layers internal to the sheath.

In addition, also solved are problems resulting from unsteady positioning of the conductor within the self-repairing material bringing about off-setting of the conductor relative to the cable axis and thickness unevenness in the self-repairing layer itself.

More particularly, the present invention relates to an electrical cable with self-repairing protection comprising: at least one conductor; at least one outer coating sheath; characterized in that it further comprises: at least one layer of self-repairing material interposed between the conductor and the outer coating sheath, the self-repairing material layer being distributed around the conductor and having at least one region wherein its extension is interrupted; and at least one anchoring portion between the conductor and the outer coating sheath, disposed at said interruption region, wherein the self-repairing material is dielectric and has a predetermined cohesiveness and a controlled flowability at a working temperature of the cable.

In particular, a plurality of anchoring portions homogeneously distributed around the conductor is preferably provided, each portion being placed at an interruption region of the extension of the layer of self-repairing material.

The layer of self-repairing material is conveniently provided to extend around the conductor following a distribution line along which the ratio between the extension of the self-repairing material layer and the extension of the interruption regions is at least equal to 0.5, and preferably included between 0.5 and 10, more preferably between 0.7 and 2.

The layer of self-repairing material and said at least one anchoring portion can be advantageously disposed directly in contact with the conductor.

In a preferred embodiment, it is however provided that at least one inner coating layer is interposed between the conductor and the layer of self-repairing material.

Each anchoring portion is conveniently directly put into contact with, and possibly joined in one piece to, the inner coating layer.

It is also preferably provided that the anchoring portion or portions should be put directly into contact with, and preferably joined in one piece to the outer coating sheath.

The Applicant has further found convenient for the self-repairing material layer to have a thickness not lower than 0.1 mm.

According to a further aspect, the present invention relates to a method of manufacturing an electrical cable comprising the step of externally applying an outer coating sheath around at least one conductor, characterized in that it further comprises the following steps: applying at least one layer of self-repairing material between the conductor itself and the outer coating sheath; forming at least one interruption region in the extension of said layer of self-repairing material; disposing at least one anchoring portion between the conductor and the outer coating sheath at said interruption region, wherein the self-repairing material is dielectric and has a predetermined cohesiveness and a controlled flowability at a working temperature of the cable.

In particular, a plurality of said interruption regions homogenously distributed around the conductor is preferably formed and a plurality of anchoring portions are disposed each at one of said interruption regions.

According to a first embodiment of the present invention, the interruption region of the extension of the self-repairing material layer is formed by removing part of the applied self-repairing material from said conductor.

The self-repairing material and anchoring portions can be directly applied to the conductor.

Alternatively, at least one inner coating layer is applied to the conductor before carrying out application of the self-repairing material layer. In this case, the self-repairing material and the anchoring portions are applied directly in contact with the inner coating layer, and possibly accomplished simultaneously, using the same material forming said inner coating layer so as to define one single body on the conductor.

In addition, the anchoring portions are preferably put directly into contact with the outer coating sheath, and possibly manufactured simultaneously with said sheath, to define one single body circumscribing the conductor.

In accordance with a second embodiment of the method in accordance with the present invention, the anchoring portions, the outer coating sheath and the inner coating layer are made of the same coating material, so as to form a unitary body.

Preferably, application of the self-repairing material layer is carried out by injecting the material itself into said coating material, concurrently with the simultaneous accomplishment of the inner coating layer, the anchoring portions and the outer coating sheath.

The present invention also relates to an apparatus for manufacturing electrical cables with self-repairing protection, comprising at least one guide head having at least one inlet opening and at least one outlet opening through which at least one conductor is lengthwise moved; first application devices fed with a coating material and connected to said outlet opening for depositing at least one outer coating sheath around the conductor, characterized in that it further comprises: second application devices operatively associated with the guide head for depositing at least one layer of self-repairing material around the conductor, said second application devices being arranged to define at least one interruption region of the layer extension in the layer of self-repairing material, wherein the self-repairing material is dielectric and has a predetermined cohesiveness and a controlled flowability at a working temperature of the cable.

In accordance with a first preferred embodiment, the second application devices comprise: at least one storage chamber for the self-repairing material located in the guide head between said inlet opening and outlet opening, said storage chamber and said self-repairing material being passed through by the conductor moving towards the outlet opening; at least one extrusion tip disposed at said outlet opening and arranged to remove at least part of the self-repairing material layer from the conductor to define said at least one interruption region.

In more detail, the extrusion tip preferably has one or more forming teeth homogeneously distributed around the conductor, which act in abutment relationship relative to the conductor to form said interruption region, each forming tooth having at least one conveying surface converging towards the conductor in the feeding direction of the latter so as to delimit, in the first application devices, at least one application channel so as to bring part of said coating material to said interruption region.

In a further preferred solution, the second application devices comprise at least one dispensing nozzle fed with the self-repairing material and operatively associated with said first application devices to inject the self-repairing material into the coating material flowing towards the outlet opening.

Further features and advantages will be more apparent from the detailed description of some preferred but non-exclusive embodiments of an electric cable with self-repairing protection and an apparatus for accomplishment of the same, following a method in accordance with the present invention. Such a description will be set forth hereinafter with reference to the accompanying drawings, given only for illustrative and thus non-limiting purposes, in which:
- Fig. 1 shows the cross-section of an electrical cable according to a first embodiment of the present invention;
- Fig. 2 shows the cross-section of an electrical cable in accordance with a second embodiment;
- Fig. 3 is a longitudinal section of an apparatus for manufacturing the electrical cable shown in Fig. 1.
- Fig. 4 is an interrupted perspective view illustrating, with an enlarged scale relative to Fig. 3, a construction detail of the apparatus shown in said figure;
- Fig. 5 is a longitudinal section of an apparatus for manufacturing the electrical cable shown in Fig. 2.

With reference to the drawings, an electrical cable with self-repairing protection in accordance with the present invention has been generally identified by reference numeral 1.

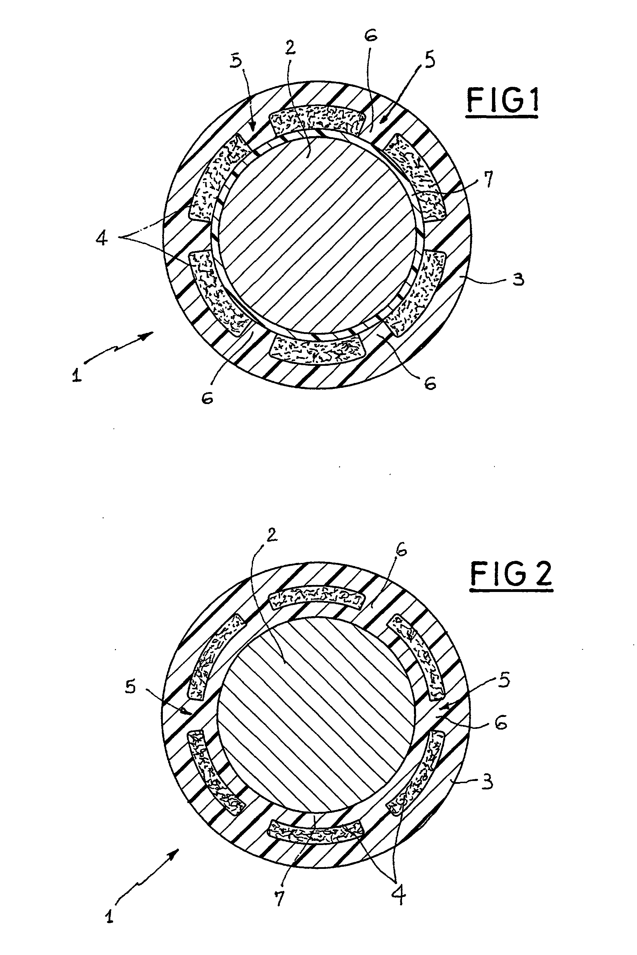

As shown in Figs. 1 and 2, the electrical cable 1 comprises at least one conductor 2 which is generally made up of metal wires, preferably copper or aluminium wires, stranded following conventional techniques.

The electrical cable 1 further comprises at least one outer coating sheath 3 in engagement with conductor 2 and at least one layer of self-repairing material 4 interposed between the conductor 2 and the outer coating sheath 3.

The layer of self-repairing material 4 is distributed around the conductor or conductors in a substantially homogeneous manner, in a thickness not less than 0.1 mm, preferably included between 0.2 and 2 mm. More preferably, thickness of the self-repairing material layer 4 is included between 0.3 and 1 mm.

The layer of self-repairing material 4 has at least one region of interruption 5 of its extension, at which at least one anchoring portion 6 is disposed between the conductor 2 and the insulating coating sheath 3.

In more detail, as clearly shown in Figs. 1 and 2, the layer of self-repairing material 4 preferably has a plurality of interruption regions 5 homogeneously distributed around the conductor 2, a respective anchoring portion 6 being disposed at each interruption region 5.

In both embodiments shown, the anchoring portions 6 are formed of one piece construction with the outer coating sheath 3 and are made of the same material. Alternatively, each of the anchoring portions may be provided to be made as a separate component from the outer coating sheath 3 and preferably put directly into contact with said sheath, as well as the self-repairing material layer 4.

To ensure in any event intervention of the self-repairing material when an accidental damage of the cable occurs, the whole space occupied by the self-repairing material layer 4 around conductor 2 preferably is not less than a predetermined value.

In this connection, the ratio of the extension of the self-repairing material layer 4 to the overall extension of the interruption regions 5 is preferably at least equal to 0.5, and preferably included between 0.5 and 10, more preferably between 0.7 and 2.

The overall extension of the self-repairing material layer 4 is determined by the sum of the extensions of the individual arcs defined, between the different interruption regions 5, along a circumferential distribution line of the layer itself, circumscribing the conductor or conductors 2 concentrically to the cable 1. Likewise, the overall extension of the interruption regions 5 can be defined as the sum of the arcs subtended by the same interruption regions along the circumferential distribution line of the self-repairing material layer 4 around the conductor or conductors 2.

In addition, it is preferably provided that between the conductor 2 and the layer of self-repairing material 4 at least one inner coating layer 7, preferably made of an electrically insulating material, is interposed.

In a first embodiment shown in Fig. 1, the inner coating layer 7 comprises at least one tape made of insulating material, Mylar® for example, helically wound around, or longitudinally applied to, the conductor 2. Alternatively, the inner coating layer 7 can be applied by extrusion onto the conductor 2. Acting directly in contact with the inner coating layer 7 is the self-repairing material layer 4 and each of the anchoring portions 6.

In accordance with a second embodiment shown in Fig. 2, the inner coating layer 7 is formed of one piece construction with the same material forming the anchoring portions 6 and the outer coating sheath 3, so as to form a single insulating body having the self-repairing material layer 4 incorporated therein.

It is however to be noted that the cable 1 can be also made following other solutions involving interposition of the self-repairing material layer 4 between the conductor 2 and the outer coating sheath 3. For example, the conductor may be devoid of any inner coating layer 7. Consequently the layer of self-repairing material 4 and the anchoring portions 6 may be directly in contact with the conductor 2.

According to a preferred embodiment of the invention, the anchoring portions 6 have a section of trapezoidal shape with the major base in contact with the inner coating layer 7. This trapezoidal shape allows to increase the area of contact between the anchoring portions 6 and the inner coating layer 7, whilst the overall circumferential extension of the self-repairing material layer 4 at the interface with the outer coating sheath 3 remains substantially unalterated.

In case of possible mechanical abuses on the electrical cable 1, the self-repairing material 4 intervenes ensuring integrity of the damaged cable region to be restored. In more detail, if during installation and/or servicing operations the outer coating sheath is damaged by cuts and/or tears reaching the self-repairing material layer and even beyond, the material therein contained will tend to "move" until it closes said tear or cut.

To this purpose, the self-repairing material 4 is advantageously provided with a predetermined cohesiveness, so that, following creation of a discontinuity in the material itself, due to the action of a cutting tool for example, and once the cause of this discontinuity has been eliminated, the molecules constituting the self-repairing material are capable of spontaneously recreating intermolecular bonds that are sufficient to restore continuity of the material itself. This phenomenon is of a reversible nature, i.e. the self-repairing material is capable of effectively carrying out its function an indefinite number of times.

It has been found that a cohesive force having values of at least 0.05 kg/cm² ensures a sufficient cohesiveness of the self-repairing material.

In addition, in the self-repairing materials in accordance with the present invention the re-cohesion force is preferably substantially identical with the cohesive force as above defined, and in any event has a value not lower than 80%, preferably not lower than 90%, with respect to the value of the cohesive force measured on the material as such.

The self-repairing material flowability is to be controlled in such a way as to avoid loss of material either by drainage from the extremities of the cable or by leakage from the point of rupture of the coating, while ensuring the material capability of migrating towards the point of rupture to a sufficient amount to repair the damage.

This flowability control must be ensured both at room temperature and at higher temperatures, for example at the maximum working temperature envisaged for the cable (usually 75-90°C).

The Applicant has found it convenient to empirically evaluate the flowability of the self-repairing material by a test in which the displacement of a predetermined amount of material placed on an inclined plate at a predetermined temperature and for a predetermined period of time is measured. This test is described in the technical specification ST/LAB/QFE/06, §5.5, established by France Telecom/CNET (release: January 1994).

In compliance with the above test, it is preferably provided that flowability of the self-repairing material is such that a sample of about three grams of self-repairing material, put on an aluminium plate inclined at 60° relative to a horizontal plane and maintained at 60°C for twenty-four hours, would show a displacement of the front of the material along the inclined plate included between 0.5 and 400 mm.

In addition, the self-repairing material is preferably a dielectric material, capable of re-establishing electrical insulation of the cable 1. This property is particularly important when a mechanical abuse occurs so as to cause partial or complete breaking of the outer coating sheath 3, i.e. so as to reach the conductor 2. Generally, values of alternating current dielectric strength greater than 15 kV/mm, preferably greater than 20 kV/mm, and resistivity values higher than 10¹⁴ Ω • cm, preferably higher than 10¹⁶ Ω• cm, are sufficient.

Another advantageous feature of the self-repairing material is its capacity to exert an efficient blocking action against external moisture tending to infiltrate the cable through the point of rupture of the coating.

For that purpose, it is appropriate for the self-repairing material to have a low saturation water content, with values, measured at room temperature by Karl-Fisher titration, generally lower than 400 ppm.

On the other hand, in the case an inner coating layer 7 consisting of a material which is crosslinkable via silanes should be provided, it is convenient that the self-repairing material, while absorbing small amounts of moisture, should have a sufficient permeability to water vapour since, as known, crosslinking via silanes takes place in the presence of water.

Preferred values of permeability to water vapour, measured at room temperature according to ASTM E 96, are generally included between 1.2•10⁻⁷ and 8.0•10⁻⁶ g/(cm·hour·mmHg).

A first class of materials suitable for making the self-repairing layer according to the present invention consists of amorphous polymers having properties of high-viscosity liquids or of semi-solids, these polymers being selected, for example, from the following classes of products:
(a) polyisobutene or isobutene copolymers with minor amounts of different C₄-C₁₂ alpha-olefins;
(b) atactic propylene homopolymers;
(c) silicone rubbers, consisting of linear chains of monomer units of formula -O-SiR₁R₂-, in which R₁ and R₂ are optionally substituted aliphatic or aromatic radicals, such as, for example: dimethylsilicone, methylphenylsilicone, methylvinyl-silicone, silicones containing cyanoacrylic or fluoroalkyl groups, and the like.

The amorphous polymers mentioned above can be used as such or dissolved in a suitable solvent, for example a mineral oil or a synthetic oil, in particular a paraffin oil or a naphthenic oil such as, for example, the oils known by the notations ASTM 103, 104A and 104B. Preferably, low molecular weight products that are homologues of the amorphous polymer can be used as solvents.

In the case where the amorphous polymer is dissolved in a suitable solvent as mentioned above, a thickening agent can advantageously be added to the composition, the main function of this thickening agent being to control flowability, thereby reducing the risk of the self-repairing material uncontrollably leaking from the cable.

Another class of materials which are suitable for forming the self-repairing inner layer according to the present invention consists of solid polymeric materials dispersed in an oily phase.
The oily phase can consist, for example, of:
(a) paraffinic oils or naphthenic oils, for example the oils ASTM 103, 104A or 104B;
(b) polybutene oils with an osmometric average molecular weight of between 400 and 1,300, preferably between 500 and 1,000, which can be obtained by polymerization of C₄ olefin mixtures mainly containing isobutene, for example commercial products Napvis® (BP Chemicals) and Indopol® (Amoco);
(c) polypropylene oils;
(d) low molecular weight polyesters, for example acrylic acid polyesters, such as product ECA 7955 from Exxon Chemical Co.;
or mixtures thereof.

For further information as regards composition of the self-repairing material in accordance with the present invention, please refer to that which has already been described in the above-mentioned Patent Application EP 99103092.5, in the name of the same Applicant.

The outer coating sheath 3, the inner coating layer 7, if any, and the anchoring portions 6 can be, in turn, made of a conventional polymeric coating material, crosslinked or not, generally of the polyolefin type, such as polyethylene, polypropylene, ethylene/propylene copolymers, ethylene/propylene/diene terpolymers and the like, or mixtures thereof.

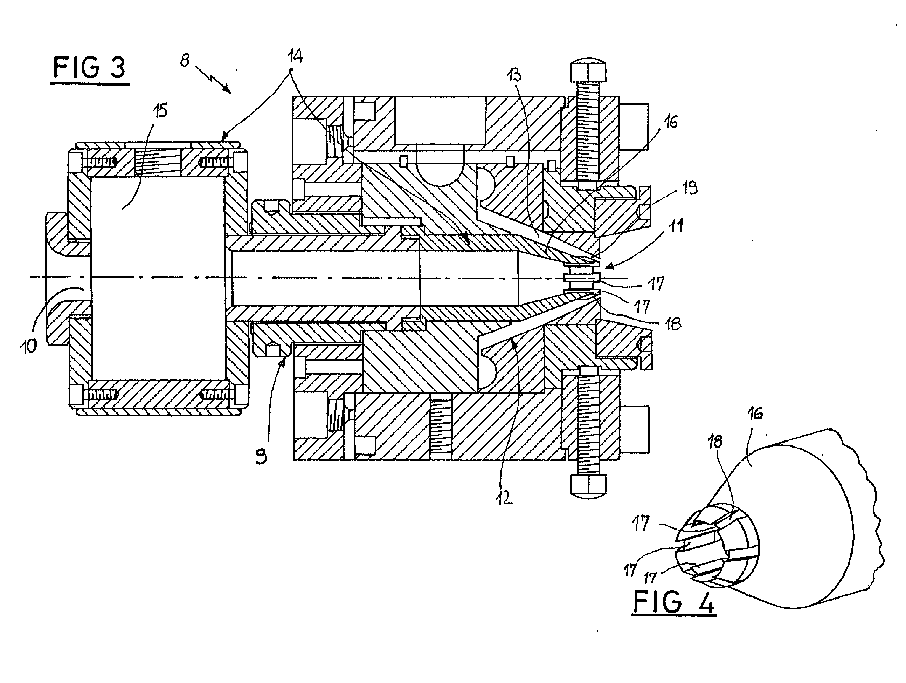

An apparatus for manufacturing an electrical cable 1 in accordance with the embodiment shown in Fig. 1 is illustrated with reference to Fig. 3.

The apparatus 8 comprises at least one guide head 9 having at least one inlet opening 10 and at least one outlet opening 11 aligned with each other, through which conductor 2 is fitted, possibly provided with the inner coating layer 7. By pulling devices, not shown as they can be obtained in any manner convenient for a person skilled in the art, the conductor 2 is moved at a constant and controlled speed from the inlet opening 10 to the outlet opening 11. Incorporated into the guide head 9 are first application devices 12 fed with the polymeric coating material and terminating at the outlet opening for depositing the outer coating sheath 3 on the conductor 2. In more detail, the first application devices 12 comprise at least one feed duct 13 extending in an annular form around the outlet opening 11 of the guide head 9. By means of the feed duct 13, the outer coating sheath 3 is uniformly deposited around the whole outer surface of the conductor 2.

The apparatus 8 further comprises second application devices 14 operatively associated with the guide head 9 to deposit the layer of self-repairing material 4 around conductor 2 in the manner shown in Fig. 1, thereby substantially carrying out a pultrusion operation.

To this purpose, the second application devices 14 comprise at least one storage chamber 15 fed with the self-repairing material maintained to a sufficient degree of fluidity, preferably by heating. When conductor 2 is moved through the guide head 9, it also passes through the storage chamber 15 and consequently through the self-repairing material contained therein, which deposits around the whole surface of the conductor 2.

The second application devices 14 further comprise an extrusion tip 16 disposed at the outlet opening 11 of the guide head 9. This extrusion tip 16 distributes the self-repairing material in a predetermined thickness along the conductor 2, so as to form the self-repairing material layer 4, and is provided with one or more forming teeth 17 arranged to remove corresponding parts of the self-repairing material layer 4 from conductor 2, so as to define the above mentioned interruption regions 5.

More specifically, a plurality of forming teeth 17 is provided, said teeth being homogeneously distributed following a circumferential line at the outlet opening 11. Each forming tooth 17 acts in abutment relationship with the conductor 2, directly on the outer surface of same, or on the inner coating layer 7 previously applied thereto.

Consequently, during moving forward of the conductor 2 each tooth 17 retains a portion of the self-repairing material corresponding to a respective interruption region 5.

On the opposite side from the conductor 2, each tooth 17 has at least one conveying surface 18 converging towards the conductor 2 in the feeding direction of the latter and delimiting, in the first application devices 12, an application channel 19 intended to bring part of the polymeric coating material fed to the feed duct 13 to the respective interruption region 5. Consequently, in each of the interruption regions 5 a respective anchoring portion 6 is formed concurrently with formation of the inner coating sheath 3, by use of part of the polymeric material flowing along the feed duct 13 of the application devices 12.

Alternatively, it may be provided that to the conductor 2 entering the guide head 9 is previously applied, by an extrusion process for example, the inner coating 7 already provided with outer longitudinal ribs adapted to define the interruption portions 6. In this case the extrusion tip 16 could have a circular outlet or in any case an outlet devoid of any forming teeth 17, so as to remove the self-repairing material in excess from the radially outer surfaces of said ribs, causing application of the self-repairing material itself exclusively to the inner coating layer 7, in each of the spaces defined between two contiguous ribs.

To produce anchoring portions 6 with a section of trapezoidal shape (according to the preferred embodiment described above), each tooth 17 and the corresponding application channel 19 are configured with angled side walls to impart said trapezoidal shape to the resulting anchoring portions 6.

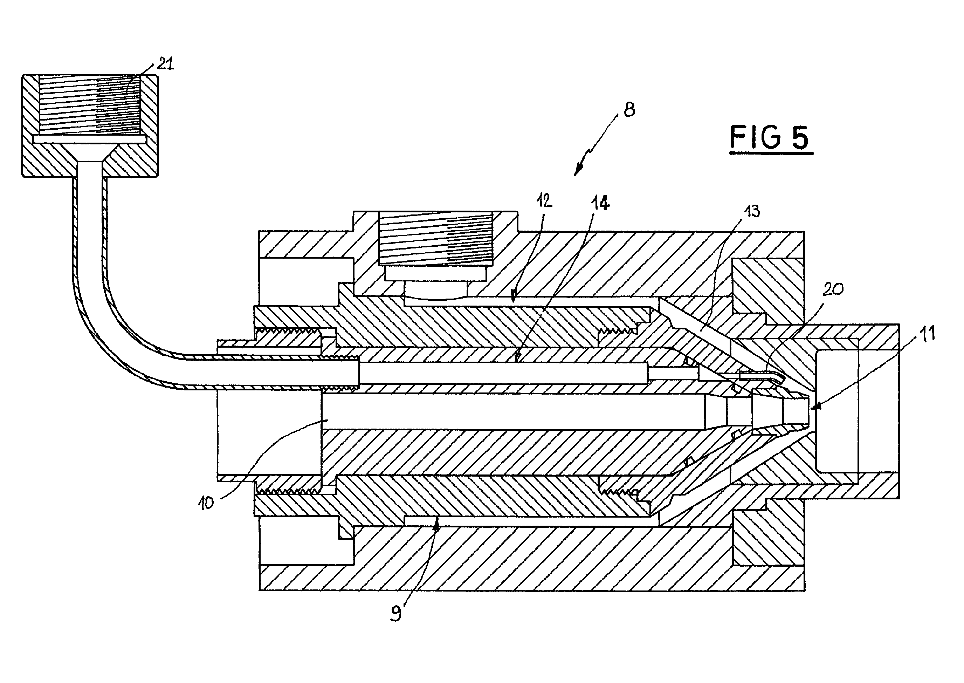

Shown in Fig. 5 is an alternative version of apparatus 8, arranged to manufacture electrical cables 1 in accordance with the embodiment shown in Fig. 2.

In this case the second application devices 14 comprise one or more distributing nozzles 20 fed with self-repairing material from a tank (not shown in the figure) connected with a fitting 21 and operatively associated with the first application devices 12 for injecting the self-repairing material itself into the polymeric coating material flowing through the feed duct 13 towards the outlet opening so as to form the outer coating sheath 3 together with the anchoring portions 6 and the optional inner coating layer 7.

The distributing nozzles 20 are circumferentially arranged around the conductor 2 and are consecutively spaced apart from each other so as to form a self-repairing material layer 4 having a plurality of interruption regions 5 disposed as shown in Fig. 2.

The outer coating sheath 3, the layer of self-repairing material 4, the interconnection portions 6 and the optional inner coating layer 7 are simultaneously applied to the conductor 2 moving through the outlet opening 11, possibly provided with an additional coating previously applied thereto.

By suitably selecting the number, size and position of the distributing nozzles 20, the number and size of the anchoring portions 6 can be suitable managed, as well as the thickness of the optional inner coating layer 7.

In particular, by positioning the distributing nozzles 20 close to the conductor 2, either elimination of the inner coating layer 7 may be achieved, or a very reduced thickness may be conferred to said coating layer, thus manufacturing a cable similar to that shown in Fig. 1.

The present invention achieves important advantages. In fact, the presence of the self-repairing layer ensures a perfect functionality of the cable even when the outer coating sheath 3 and/or the inner coating layer 7 are accidentally damaged; in addition, the self-repairing layer keeps its physical-chemical features unchanged independently of treatments and/or damages to which the cable is submitted.

Furthermore, arrangement of the anchoring portions 6 eliminates any possibility of the outer sheath 3 sliding relative to the conductor 2. In particular, any risk of sliding is prevented which may be caused by inner stresses induced in the coating sheath as a result of cooling taking place after the extrusion step carried out in the manner described above for cable manufacturing. It is to be noted that sliding actions triggered by said inner stresses usually reveal themselves in a particularly evident manner just during installation of the cable, when the latter is unwound from the packaging reel and cut into pieces of the desired length.

Due to the presence of the anchoring portions, holding of the conductor at a position perfectly concentric with the cable is also ensured, even when the cable is submitted to bending. In addition, a substantial evenness in the thickness of the self-repairing material layer is also ensured.

## Claims

1. An electrical cable with self-repairing protection comprising:
- at least one conductor (2);
- at least one outer coating sheath (3);
**characterized in that** it further comprises:
- at least one layer of self-repairing material (4) interposed between the conductor (2) and the outer coating sheath (3), the self-repairing material layer (4) being distributed around the conductor (2) and having at least one region (5) wherein its extension is interrupted;
- at least one anchoring portion (6) between the conductor (2) and the outer coating sheath (3) disposed at said interruption region (5), wherein the self-repairing material is dielectric and has a predetermined cohesiveness and a controlled flowability at a working temperature of the cable.

2. A cable as claimed in claim 1, having a plurality of anchoring portions (6) homogeneously distributed around the conductor (2), each portion being at an interruption region (9) of the extension of the self-repairing material layer (4).

3. A cable as claimed in claim 2, wherein the layer of self-repairing material (4) extends around the conductor (2) following a distribution line along which the ratio between the extension of the self-repairing material layer (4) and the extension of the interruption regions (5) is at least 0,5.

4. A cable as claimed in claim 1, wherein the layer of self-repairing material (4) and said at least one anchoring portion (6) are directly in contact with the conductor (2).

5. A cable as claimed in claim 1, wherein at least one inner coating layer (7) is interposed between the conductor (2) and the layer of self-repairing material (4).

6. A cable as claimed in claim 5, wherein said at least one anchoring portion (6) is directly put into contact with the inner coating layer (7).

7. A cable as claimed in claim 5, wherein said at least one anchoring portion (6) is joined in one piece to the inner coating layer (7).

8. A cable as claimed in claim 1, wherein said at least one anchoring portion (6) is put directly into contact with said outer coating sheath (3).

9. A cable as claimed in claim 1, wherein said at least one anchoring portion (2) is joined in one piece to the outer coating sheath (3).

10. A cable as claimed in claim 1, wherein the self-repairing material layer (4) has a thickness not lower than 0.1 mm.

11. A cable as claimed in claim 1, wherein the self-repairing material has an alternating current dielectric strength higher than 15 kV/mm and a resistivity higher than 10¹⁴ Ω·cm.

12. A cable as claimed in claim 1, wherein the self-repairing material has a cohesive force, measured at room temperature, of at least 0.05 kg/cm².

13. A cable as claimed in claim 1, wherein the self-repairing material has a cohesiveness so as re-cohesion force, measured at room temperature, has a value which is not lower than 80% relative to the value of the cohesive force measured on the material as such.

14. A cable as claimed in claim 1, wherein the self-repairing material has a controlled flowability so as a sample of about 3 grams of the self-repairing material, placed on an aluminium plate inclined at 60° relative to the horizontal plane and maintained at 60°C for 24 hours, shows a displacement of the front of the material along the inclined plate which is included between 0.5 and 400 mm.

15. A cable as claimed in claim 1, wherein the self-repairing material comprises an amorphous polymer having properties of a high-viscosity liquid or of a semi-solid.

16. A method of manufacturing electrical cables with self-repairing protection, comprising the step of externally applying an outer coating sheath (3) around at least one conductor (2),
**characterized in that** it further comprises the following steps:
- applying at least one layer of a self-repairing material (4) between the conductor (2) itself and the outer coating sheath (3), wherein the self-repairing material is dielectric and has a predetermined cohesiveness and a controlled flowability at a working temperature of the cable.
- forming at least one interruption region (5) in the extension of said layer of self-repairing material (4);
- disposing at least one anchoring portion (6) between the conductor (2) and the outer coating sheath (3) at said interruption region (5).

17. A method as claimed in claim 16, wherein said interruption region (5) of the extension of the self-repairing material layer (4) is formed by removing part of the self-repairing material distributed around the conductor (2).

18. A method as claimed in claim 17, wherein a plurality of said interruption regions (5) homogenously distributed around the conductur (2) is formed, a plurality of anchoring portions (6) being disposed each at one of said interruption regions (5).

19. A method as claimed in claim 16, wherein during the step of applying said self-repairing material layer (4), the latter is directly applied to the conductor (2) and during the step of arranging said at least one anchoring portion (6), the latter is directly placed on the conductor (2).

20. A method as claimed in claim 16, wherein before the step of applying the self-repairing material layer (4), at least one inner coating layer (7) is applied to the conductor (2).

21. A method as claimed in claim 20, wherein during the step of applying said self-repairing material layer (4), the latter is put directly into contact with the inner coating layer (7) and during the step of disposing said at least one anchoring portion (6), the latter is put directly into contact with said inner coating layer (7).

22. A method as claimed in claim 20, wherein said inner coating layer (7) and said at least one anchoring portion (6) are made simultaneously and of the same material so as to define one single body on the conductor (2).

23. A method as claimed in claim 16, wherein said at least one anchoring portion is put directly into contact with said outer coating sheath (3).

24. A method as claimed in claim 16, wherein said at least one anchoring portion (6) and said outer coating sheath are manufactured simultaneously, using the same material, to define one single body circumscribing the conductor (2).

25. A method as claimed in claim 20, wherein said inner coating layer (7), said at least one anchoring portion (6) and said outer coating sheath (3) are made of one and the same coating material in the form of a unitary body.

26. A method as claimed in claim 25, wherein application of the self-repairing material layer (4) is carried out by injecting the self-repairing material into said coating material, concurrently with the simultaneous accomplishment of the inner coating layer (7), said at least one anchoring portion (6) and the outer coating sheath (3).

27. An apparatus for manufacturing electrical cables with self-repairing protection, comprising:
- at least one guide head (9) having at least one inlet opening (10) and at least one outlet opening (11) through which at least one conductor (2) is lenghtwise moved;
- first application devices (12) fed with a coating material and connected to said outlet opening (11) for depositing at least one outer coating sheath (3) around the conductor (2),
**characterized in that** it further comprises:
- second application devices (14) operatively associated with the guide head (9) for depositing at least one layer of self-repairing material (4) around the conductor (2), said second application devices (14) being arranged to define at least one interruption region (5) of the layer extension in the layer of self-repairing material (4), wherein the self-repairing material is dielectric and has a predetermined cohesiveness and a controlled flowability at a working temperature of the cable.

28. An apparatus as claimed in claim 27, wherein said second application devices comprise:
- at least one storage chamber (15) for the self-repairing material located in the guide head (9) between said inlet opening (10) and outlet opening (11), said storage chamber (15) and self-repairing material being passed through by the conductor (2) moving towards the outlet opening (11);
- at least one extrusion tip (16) disposed at said outlet opening (11) and arranged to remove at least part of the self-repairing material layer (4) from the conductor (2) to define said at least one interruption region (5).

29. An apparatus as claimed in claim 28, wherein said extrusion tip has at least one forming tooth (17) acting in abutment relationship relative to the conductor (2) to form said interruption region (5), said forming tooth (17) having at least one conveying surface (18) extending away from the conductor (2) to delimit, in the first application devices (12), at least one application channel (19) arranged to bring part of said coating material to said interruption region (5).

30. An apparatus as claimed in claim 29, wherein said extrusion tip (16) has a plurality of said forming teeth (17) homogeneously distributed around the conductor (2).

31. An apparatus as claimed in claim 27, wherein said second application devices (14) comprise at least one dispensing nozzle (20) fed with the self-repairing material and operatively associated with said first application devices (12) to inject the self-repairing material into the coating material flowing towards the outlet opening (11).

32. An apparatus as claimed in claim 31, wherein said second application devices (14) comprise a plurality of dispensing nozzles (20) distributed around the conductor.

## Patentansprüche

1. Stromkabel mit Selbstreparaturschutz, bei welchem vorgesehen sind:
- zumindest ein Leiter (2);
- zumindest ein äußerer Beschichtungsmantel (3);
**dadurch gekennzeichnet, dass** es weiterhin aufweist:
- zumindest eine Schicht aus selbstreparierendem Material (4), die zwischen dem Leiter (2) und dem äußeren Beschichtungsmantel (3) angeordnet ist, wobei die selbstreparierende Materialschicht (4) um den Leiter (2) herum verteilt ist, und zumindest einen Bereich (5) aufweist, in welchem ihr Verlauf unterbrochen ist;
- zumindest einen Verankerungsabschnitt (6) zwischen dem Leiter (2) und dem äußeren Beschichtungsmantel (3), angeordnet an dem Unterbrechungsbereich (5),
wobei das selbstreparierende Material dielektrisch ist, und eine vorbestimmte Kohäsion und eine gesteuerte Fließfähigkeit bei einer Arbeitstemperatur des Kabels aufweist.

2. Kabel nach Anspruch 1, welches mehrere Verankerungsabschnitte (6) aufweist, die gleichmäßig um den Leiter (2) herum verteilt sind, wobei sich jeder Abschnitt an einem Unterbrechungsbereich (9) des Verlaufes der selbstreparierenden Materialschicht (4) befindet.

3. Kabel nach Anspruch 2, bei welchem sich die Schicht aus selbstreparierendem Material (4) um den Leiter (2) herum erstreckt, folgend einer Verteilungslinie, entlang welcher das Verhältnis zwischen dem Verlauf der selbstreparierenden Materialschicht (4) und dem Verlauf der Unterbrechungsbereiche (5) zumindest gleich 0,5 ist.

4. Kabel nach Anspruch 1, bei welchem die Schicht aus selbstreparierendem Material (4) und der zumindest eine Verankerungsabschnitt (6) in direktem Kontakt mit dem Leiter (2) stehen.

5. Kabel nach Anspruch 1, bei welchem zumindest eine innere Beschichtungsschicht (7) zwischen dem Leiter (2) und der Schicht aus selbstreparierendem Material (4) angeordnet ist.

6. Kabel nach Anspruch 5, bei welchem der zumindest eine Verankerungsabschnitt (6) in direkten Kontakt mit der inneren Beschichtungsschicht (7) versetzt ist.

7. Kabel nach Anspruch 5, bei welchem der zumindest eine Verankerungsabschnitt (6) einstückig mit der inneren Beschichtungsschicht (7) verbunden ist.

8. Kabel nach Anspruch 1, bei welchem der zumindest eine Verankerungsabschnitt (6) in direkten Kontakt mit dem äußeren Beschichtungsmantel (3) versetzt ist.

9. Kabel nach Anspruch 1, bei welchem der zumindest eine Verankerungsabschnitt (2) einstückig mit dem äußeren Beschichtungsmantel (3) verbunden ist.

10. Kabel nach Anspruch 1, bei welchem die selbstreparierende Materialschicht (4) eine Dicke von nicht weniger als 0,1 mm aufweist.

11. Kabel nach Anspruch 1, bei welchem die selbstreparierende Materialschicht eine Wechselstrom-Durchschlagsfestigkeit von mehr als 15 kV/mm und einen spezifischen Widerstand von mehr als 10¹⁴ Ω·cm aufweist.

12. Kabel nach Anspruch 1, bei welchem das selbstreparierende Material eine Kohäsionskraft, gemessen bei Zimmertemperatur von zumindest 0,05 kg/cm² aufweist.

13. Kabel nach Anspruch 1, bei welchem das selbstreparierende Material eine solche Kohäsion aufweist, dass die Kohäsionsrückstellkraft, gemessen bei Zimmertemperatur, einen Wert aufweist, der nicht niedriger ist als 80 % in Bezug auf den Wert der Kohäsionskraft, der bei dem Material als solchem gemessen wird.

14. Kabel nach Anspruch 1, bei welchem das selbstreparierende Material eine gesteuerte Fließfähigkeit aufweist, sodass eine Probe von etwa 3 Gramm des selbstreparierenden Materials, aufgebracht auf eine Aluminiumplatte in einer Schrägstellung von 60° relativ zur Horizontalebene und 24 Stunden lang auf 60°C gehalten, eine Verschiebung der Vorderseite des Materials entlang der schrägen Platte aufweist, die zwischen 0,5 und 400 mm liegt.

15. Kabel nach Anspruch 1, bei welchem das selbstreparierende Material ein amorphes Polymer aufweist, das Eigenschaften einer hochviskosen Flüssigkeit oder einer halbmassiven Substanz aufweist.

16. Verfahren zur Herstellung von Stromkabeln mit Selbstreparaturschutz, mit dem Schritt des Aufbringens von außen eines äußeren Beschichtungsmantels (3) um zumindest einen Leiter (2) herum,
**dadurch gekennzeichnet, dass** weiterhin folgende Schritte vorgesehen sind:
- Aufbringen zumindest einer Schicht aus einem selbstreparierenden Material (4) zwischen dem Leiter (2) selbst und dem äußeren Beschichtungsmantel (3), wobei das selbstreparierende Material dielektrisch ist, und eine vorbestimmte Kohäsion und eine gesteuerte Fließfähigkeit bei einer Arbeitstemperatur des Kabels aufweist,
- Ausbildung zumindest eines Unterbrechungsbereichs (5) im Verlauf der Schicht aus dem selbstreparierendem Material (4);
- Anordnen zumindest eines Verankerungsabschnitts (6) zwischen dem Leiter (2) und dem äußeren Beschichtungsmantel (3) an dem Unterbrechungsbereich (5).

17. Verfahren nach Anspruch 16, bei welchem der Unterbrechungsbereich (5) des Verlaufs der selbstreparierenden Materialschicht (4) **dadurch** ausgebildet wird, dass ein Teil des selbstreparierenden Materials entfernt wird, das um den Leiter (2) herum verteilt ist.

18. Verfahren nach Anspruch 17, bei welchem mehrere der Unterbrechungsbereiche (5) gleichmäßig um den Leiter (2) herum verteilt ausgebildet werden, und mehrere Verankerungsabschnitte (6) jeweils an einem der Unterbrechungsbereiche (5) angeordnet werden.

19. Verfahren nach Anspruch 16, bei welchem während des Schrittes des Aufbringens der selbstreparierenden Materialschicht (4) diese direkt auf den Leiter (2) aufgebracht wird, und während des Schrittes des Anordnens des zumindest einen Verankerungsabschnitts (6) dieser direkt auf den Leiter (2) aufgesetzt wird.

20. Verfahren nach Anspruch 16, bei welchem vor dem Schritt des Aufbringens der selbstreparierenden Materialschicht (4) zumindest eine innere Beschichtungsschicht (7) auf den Leiter (2) aufgebracht wird.

21. Verfahren nach Anspruch 20, bei welchem während des Schrittes des Aufbringens der selbstreparierenden Materialschicht (4) diese in direkten Kontakt mit der inneren Beschichtungsschicht (7) versetzt wird, und während des Schrittes des Anordnens des zumindest einen Verankerungsabschnitts (6) dieser in direkten Kontakt mit der inneren Beschichtungsschicht (7) versetzt wird.

22. Verfahren nach Anspruch 20, bei welchem die innere Beschichtungsschicht (7) und der zumindest eine Verankerungsabschnitt (6) gleichzeitig und aus demselben Material hergestellt werden, um so einen einzigen Körper auf dem Leiter (2) auszubilden.

23. Verfahren nach Anspruch 16, bei welchem der zumindest eine Verankerungsabschnitt in direkten Kontakt mit den äußeren Beschichtungsmantel (3) versetzt wird.

24. Verfahren nach Anspruch 16, bei welchem der zumindest eine Verankerungsabschnitt (6) und der äußere Beschichtungsmantel gleichzeitig hergestellt werden, unter Verwendung desselben Materials, um einen einzelnen Körper auszubilden, welcher den Leiter (2) umschreibt.

25. Verfahren nach Anspruch 20, bei welchem die innere Beschichtungsschicht (7), der zumindest eine Verankerungsabschnitt (6), und der äußere Beschichtungsmantel (3) aus einem und demselben Beschichtungsmaterial in Form eines einstückigen Körpers hergestellt werden.

26. Verfahren nach Anspruch 25, bei welchem das Aufbringen der selbstreparierenden Materialschicht (4) **dadurch** durchgeführt wird, dass das selbstreparierende Material in das Beschichtungsmaterial eingespritzt wird, zusammen mit der gleichzeitigen Fertigstellung der inneren Beschichtungsschicht (7), des zumindest einen Verankerungsabschnitts (6), und des äußeren Beschichtungsmantels (3).

27. Einrichtung zur Herstellung von Stromkabeln mit Selbstreparaturschutz, bei welcher vorgesehen sind:
- zumindest ein Führungskopf (9), der zumindest eine Einlassöffnung (10) und zumindest eine Auslassöffnung (11) aufweist, durch welche zumindest ein Leiter (2) in Längsrichtung bewegt wird;
- erste Auftragsvorrichtungen (12), denen ein Beschichtungsmaterial zugeführt wird, und die an die Auslassöffnung (11) angeschlossen sind, um zumindest einen äußeren Beschichtungsmantel (3) um den Leiter (2) herum abzulagern,
**dadurch gekennzeichnet, dass** sie weiterhin aufweist:
- zweite Auftragsvorrichtungen (14), die betriebsmäßig dem Führungskopf (9) zugeordnet sind, um zumindest eine Schicht aus selbstreparierenden Material (4) um den Leiter (2) herum abzulagern,
wobei die zweiten Auftragsvorrichtungen (14) so ausgebildet sind, dass zumindest ein Unterbrechungsbereich (5) des Schichtverlaufes in der Schicht aus selbstreparierenden Material (4) ausgebildet wird, wobei das selbstreparierende Material dielektrisch ist, und eine vorbestimmte Kohäsion und eine gesteuerte Fließfähigkeit bei einer Arbeitstemperatur des Kabels aufweist.

28. Einrichtung nach Anspruch 27, bei welcher die zweiten Auftragsvorrichtungen aufweisen:
- zumindest eine Speicherkammer (15) für das selbstreparierende Material, die in dem Führungskopf (9) zischen der Einlassöffnung (10) und der Auslassöffnung (11) angeordnet ist, wobei durch die Speicherkammer (15) und das selbstreparierende Material der Leiter (2) hindurchgeht, der sich zur Auslassöffnung (11) hinbewegt;
- zumindest eine Extrusionsspitze (16), die an der Auslassöffnung (11) angeordnet ist, und dazu ausgebildet ist, zumindest einen Teil der selbstreparierenden Materialschicht (4) von dem Leiter (2) zu entfernen, um den zumindest einen Unterbrechungsbereich (5) auszubilden.

29. Einrichtung nach Anspruch 28, bei welcher die Extrusionsspitze zumindest einen Formgebungszahn (17) aufweist, der in Anlage relativ zum Leiter (2) arbeitet, um den Unterbrechungsbereich (5) auszubilden, wobei der Formgebungszahn (17) zumindest eine Förderoberfläche (18) aufweist, die sich weg vom Leiter (2) erstreckt, um in den ersten Auftragsvorrichtungen (12) zumindest eine Aufbringungskanal (19) abzugrenzen, der so ausgebildet ist, dass er einen Teil des Beschichtungsmaterials zu dem Unterbrechungsbereich (5) bringt.

30. Einrichtung nach Anspruch 29, bei welcher die Extrusionsspitze (16) mehrere der Formgebungszähne (17) aufweist, die gleichmäßig um den Leiter (2) herum verteilt sind.

31. Einrichtung nach Anspruch 27, bei welcher die zweiten Auftragsvorrichtungen (14) zumindest eine Ausgabedüse (20) aufweisen, die mit dem selbstreparierenden Material versorgt wird, und betriebsmäßig den ersten Auftragsvorrichtungen (12) zugeordnet ist, um das selbstreparierende Material in das Beschichtungsmaterial einzuspritzen, das zur Auslassöffnung (11) hinfließt.

32. Einrichtung nach Anspruch 31, bei welcher die zweiten Auftragsvorrichtungen (14) mehrere Ausgabedüsen (20) aufweisen, die um den Leiter herum verteilt sind.

## Revendications

1. Câble électrique avec protection autoréparable comprenant :
- au moins un conducteur (2) ;
- au moins une gaine de revêtement extérieure (3) ;
**caractérisé en ce qu'**il comprend en outre :
- au moins une couche de matériau autoréparable (4) intercalée entre le conducteur (2) et la gaine de revêtement extérieure (3), la couche de matériau autoréparable (4) étant répartie autour du conducteur (2) et comportant au moins une région (5) dans laquelle son étendue est interrompue ;
- au moins une partie d'ancrage (6) entre le conducteur (2) et la gaine de revêtement extérieure (3) disposée au niveau de ladite région d'interruption (5),
dans lequel le matériau autoréparable est diélectrique et a une cohésion prédéterminée et une coulabilité contrôlée à une température de travail du câble.

2. Câble selon la revendication 1, comportant une pluralité de parties d'ancrage (6) réparties de façon homogène autour du conducteur (2), chaque partie se trouvant au niveau d'une région d'interruption (9) de l'étendue de la couche de matériau autoréparable (4).

3. Câble selon la revendication 2, dans lequel la couche de matériau autoréparable (4) s'étend autour du conducteur (2) en suivant une ligne de distribution le long de laquelle le rapport entre l'étendue de la couche de matériau autoréparable (4) et l'étendue des régions d'interruption (5) vaut au moins 0,5.

4. Câble selon la revendication 1, dans lequel la couche de matériau autoréparable (4) et ladite au moins une partie d'ancrage (6) sont directement au contact du conducteur (2).

5. Câble selon la revendication 1, dans lequel au moins une couche de revêtement intérieure (7) est intercalée entre le conducteur (2) et la couche de matériau autoréparable (4).

6. Câble selon la revendication 5, dans lequel ladite au moins une partie d'ancrage (6) est directement mise en contact avec la couche de revêtement intérieure (7).

7. Câble selon la revendication 5, dans lequel ladite au moins une partie d'ancrage (6) est liée d'une pièce à la couche de revêtement intérieure (7).

8. Câble selon la revendication 1, dans lequel ladite au moins une partie d'ancrage (6) est mise directement en contact avec ladite gaine de revêtement extérieure (3).

9. Câble selon la revendication 1, dans lequel ladite au moins une partie d'ancrage (2) est liée d'une pièce à la gaine de revêtement extérieure (3).

10. Câble selon la revendication 1, dans lequel la couche de matériau autoréparable (4) a une épaisseur supérieure ou égale à 0,1 mm.

11. Câble selon la revendication 1, dans lequel le matériau autoréparable a une rigidité diélectrique, en courant alternatif, supérieure à 15 kV/mm et une résistivité supérieure à 10¹⁴ Ω.cm.

12. Câble selon la revendication 1, dans lequel le matériau autoréparable a une force de cohésion, mesurée à la température ambiante, d'au moins 0,05 kg/cm².

13. Câble selon la revendication 1, dans lequel le matériau autoréparable a une cohésion telle que la force de recohésion, mesurée à la température ambiante, a une valeur qui n'est pas inférieure à 80 % par rapport à la valeur de la force de cohésion mesurée sur le matériau en tant que tel.

14. Câble selon la revendication 1, dans lequel le matériau autoréparable a une coulabilité contrôlée telle qu'un échantillon d'environ 3 grammes du matériau autoréparable, placé sur une plaque d'aluminium inclinée à 60° par rapport au plan horizontal et maintenue à 60 °C pendant 24 heures, présente un déplacement de l'avant du matériau sur le plan incliné qui est compris entre 0,5 et 400 mm.

15. Câble selon la revendication 1, dans lequel le matériau autoréparable comprend un polymère amorphe ayant les propriétés d'un liquide à viscosité élevée ou d'un semi-solide.

16. Procédé de fabrication de câbles électriques avec protection autoréparable, comprenant l'étape consistant à appliquer extérieurement une gaine de revêtement extérieure (3) autour d'au moins un conducteur (2),
**caractérisé en ce qu'**il comprend en outre les étapes consistant à :
- appliquer au moins une couche d'un matériau autoréparable (4) entre le conducteur (2) et la gaine de revêtement extérieure (3), le matériau autoréparable étant diélectrique et ayant une cohésion prédéterminée et une coulabilité contrôlée à une température de travail du câble,
- former au moins une région d'interruption (5) dans l'étendue de ladite couche de matériau autoréparable (4) ;
- placer au moins une partie d'ancrage (6) entre le conducteur (2) et la gaine de revêtement extérieure (3) au niveau de ladite région d'interruption (5).

17. Procédé selon la revendication 16, dans lequel ladite région d'interruption (5) de l'étendue de la couche de matériau autoréparable (4) est formée en retirant une partie du matériau autoréparable réparti autour du conducteur (2).

18. Procédé selon la revendication 17, dans lequel une pluralité desdites régions d'interruption (5) réparties de façon homogène autour du conducteur (2) est formée, une pluralité de parties d'ancrage (6) étant placées chacune au niveau de l'une desdites régions d'interruption (5).

19. Procédé selon la revendication 16, dans lequel, pendant l'étape d'application de ladite couche de matériau autoréparable (4), cette dernière est directement appliquée sur le conducteur (2) et pendant l'étape de mise en place de ladite au moins une partie d'ancrage (6), cette dernière est placée directement sur le conducteur (2).

20. Procédé selon la revendication 16, dans lequel, avant l'étape d'application de la couche de matériau autoréparable (4), on applique au moins une couche de revêtement intérieure (7) sur le conducteur (2).

21. Procédé selon la revendication 20, dans lequel, pendant l'étape d'application de ladite couche de matériau autoréparable (4), cette dernière est mise directement en contact avec la couche de revêtement intérieure (7) et pendant l'étape de mise en place de ladite au moins une partie d'ancrage (6), cette dernière est mise directement en contact avec ladite couche de revêtement intérieure (7).

22. Procédé selon la revendication 20, dans lequel ladite couche de revêtement intérieure (7) et ladite au moins une partie d'ancrage (6) sont fabriquées simultanément et avec le même matériau afin de définir un seul corps sur le conducteur (2).

23. Procédé selon la revendication 16, dans lequel ladite au moins une partie d'ancrage est mise directement en contact avec ladite gaine de revêtement extérieure (3).

24. Procédé selon la revendication 16, dans lequel ladite au moins une partie d'ancrage (6) et ladite gaine de revêtement extérieure sont fabriquées simultanément, en utilisant le même matériau, pour définir un seul corps circonscrivant le conducteur (2).

25. Procédé selon la revendication 20, dans lequel ladite couche de revêtement intérieure (7), ladite au moins une partie d'ancrage (6) et ladite gaine de revêtement extérieure (3) sont faites d'un seul et même matériau de revêtement sous la forme d'un corps unitaire.

26. Procédé selon la revendication 25, dans lequel l'application de la couche de matériau autoréparable (4) est effectuée en injectant le matériau autoréparable dans ledit matériau de revêtement, simultanément à la formation simultanée de la couche de revêtement intérieure (7), de ladite au moins une partie d'ancrage (6) et de la gaine de revêtement extérieure (3).

27. Appareil pour fabriquer des câbles électriques avec protection autoréparable, comprenant :
- au moins une tête de guidage (9) comportant au moins une ouverture d'entrée (10) et au moins une ouverture de sortie (11) par laquelle au moins un conducteur (2) est déplacé dans le sens de la longueur ;
- des premiers dispositifs d'application (12) alimentés avec un matériau de revêtement et branchés sur ladite ouverture de sortie (11) pour déposer au moins une gaine de revêtement extérieure (3) autour du conducteur (2),
**caractérisé en ce qu'**il comprend en outre :
- des deuxièmes dispositifs d'application (14) associés fonctionnellement à la tête de guidage (9) pour déposer au moins une couche de matériau autoréparable (4) autour du conducteur (2), lesdits deuxièmes dispositifs d'application (14) étant adaptés pour définir au moins une région d'interruption (5) de l'étendue de couche dans la couche de matériau autoréparable (4),
dans lequel le matériau autoréparable est diélectrique et a une cohésion prédéterminée et une coulabilité contrôlée à une température de travail du câble.

28. Appareil selon la revendication 27, dans lequel lesdits deuxièmes dispositifs d'application comprennent :
- au moins une chambre de stockage (15) pour le matériau autoréparable situé dans la tête de guidage (9) entre ladite ouverture d'entrée (10) et ladite ouverture de sortie (11), ladite chambre de stockage (15) et ledit matériau autoréparable étant traversés par le conducteur (2) qui se déplace vers l'ouverture de sortie (11) ;
- au moins un embout d'extrusion (16) placé au niveau de ladite ouverture de sortie (11) et adapté pour enlever au moins une partie de la couche de matériau autoréparable (4) du conducteur (2) pour définir ladite au moins une région d'interruption (5).

29. Appareil selon la revendication 28, dans lequel ledit embout d'extrusion a au moins une dent de formation (17) qui agit en relation d'appui par rapport au conducteur (2) pour former ladite région d'interruption (5), ladite dent de formation (17) ayant au moins une surface de transport (18) qui s'étend à l'écart du conducteur (2) pour délimiter, dans les premiers dispositifs d'application (12), au moins un canal d'application (19) conçu pour apporter une partie dudit matériau de revêtement vers ladite région d'interruption (5).

30. Appareil selon la revendication 29, dans lequel ledit embout d'extrusion (16) comporte une pluralité desdites dents de formation (17) réparties uniformément autour du conducteur (2).

31. Appareil selon la revendication 27, dans lequel lesdits deuxièmes dispositifs d'application (14) comprennent au moins une buse de distribution (20) alimentée avec le matériau autoréparable et associée fonctionnellement auxdits premiers dispositifs d'application (12) pour injecter le matériau autoréparable dans le matériau de revêtement qui s'écoule vers l'ouverture de sortie (11).

32. Appareil selon la revendication 31, dans lequel lesdits deuxièmes dispositifs d'application (14) comprennent une pluralité de buses de distribution (20) réparties autour du conducteur.
